Europäisches Patentamt

(19) European Patent Office

Office européen des brevets

(11) Veröffentlichungsnummer: **0 009 811**
**B1**

# (12) EUROPÄISCHE PATENTSCHRIFT

(45) Veröffentlichungstag der Patentschrift:
23.06.82

(51) Int. Cl.³: **H 04 B 3/36**

(21) Anmeldenummer: **79103784.9**

(22) Anmeldetag: **03.10.79**

(54) Leitungsverstärker mit einer Schaltungsanordnung zum eingangs- und ausgangsseitigen Überspannungsgrobschutz.

(30) Priorität: **09.10.78 DE 2843919**

(43) Veröffentlichungstag der Anmeldung:
**16.04.80 Patentblatt 80/8**

(45) Bekanntmachung des Hinweises auf die Patenterteilung:
**23.06.82 Patentblatt 82/25**

(84) Benannte Vertragsstaaten:
**AT BE CH FR GB IT NL**

(56) Entgegenhaltungen:
**DE-A-1 462 247**
**US-A-3 510 678**
**FUJITSU SCIENTIFIC AND TECHNICAL JOUR-NAL, Band 14, Nr. 2, Juni 1978, Kawasaki, JP, OKUMURA et al.: »Denmark-Norway submarine cable system«, Seiten 1—43**

(73) Patentinhaber: **SIEMENS AKTIENGESELLSCHAFT**
**Berlin und München, Postfach 22 02 61,**
**D-8000 München 22 (DE)**

(72) Erfinder: **Popp, Erwin, Dipl.-Ing., Siegfriedstrasse 11,**
**D-8014 Neublberg (DE)**

## Leitungsverstärker mit einer Schaltungsanordnung zum eingangs- und ausgangsseitigen Überspannungsgrobschutz

Die Erfindung bezieht sich auf einen wie im ersten Teil des Patentanspruchs 1 angegebenen Leitungsverstärker.

Ein derartiger Leitungsverstärker ist bereits aus der DE-A-1 462 247 bekannt. Bei der bekannten Ausführung des Blitzschutzes von Trägerfrequenzverstärkern ist sowohl der Signaleingang als auch der Signalausgang des Verstärkers durch einen eigenen Überspannungsableiter geschützt. Der Leitungsverstärker enthält zwei Fernspeiseweichen und eine Stabilisierungsschaltung, die aus einer Diode und einem Kondensator besteht und aus dem Fernspeisegleichstrom eine stabilisierte Betriebsspannung für den Verstärker gewinnt. Die beiden Überspannungsableiter sind über die eingangsseitige Fernspeiseweiche, die Stabilisierungsschaltung und die ausgangsseitige Fernspeiseweiche galvanisch miteinander verbunden. Treten am Eingang Störspannungen auf, so kann es infolge der nicht genau übereinstimmenden Ansprechspannungen vorkommen, daß diese Störspannungen den ausgangsseitigen Überspannungsableiter zeitlich vor dem eingangsseitigen Überspannungsableiter zum Ansprechen bringen. Um für diesen Fall die Stabilisierungsschaltung gegen Überstrom zu schützen, ist vorgesehen, daß die Tiefpässe in den Fernspeiseweichen jeweils als T-Glied ausgeführt und ihre Sternpunkte durch einen Überspannungsableiter verbunden sind.

Bei dem bekannten Leitungsverstärker kann der am Eingang und/oder der am Ausgang angedeutete Überspannungsableiter ansprechen. Überspannungsableiter erzeugen aber beim Ansprechvorgang sehr steile Spannungssprünge, die im Übertragungsbereich der Verstärker einen hohen Energieanteil beinhalten, der ohne zusätzliche Dämpfung zur Zerstörung der aktiven Verstärkerelemente führen kann. Dämpfungsmaßnahmen sind am Ausgang der Verstärker besonders schwer durchzuführen, da die verfügbare Nutzausgangsleistung nicht gedämpft werden darf. Außerdem sind die zulässigen Begrenzungsspannungen am Ausgang wegen der höheren Nutzspannungen wesentlich höher als am Eingang, so daß an den Verstärkerausgängen mit einer wesentlich höheren Überlastenergie zu rechnen ist als am Verstärkereingang.

Man kann die Energiebelastung der Ausgangstransistoren von Leitungsverstärkern dadurch reduzieren, daß in der Verstärkerschaltung Energiebegrenzungswiderstände verwendet werden. Diese beeinträchtigen aber die Übertragungseigenschaften des Verstärkers.

Untersuchungen im Rahmen der Erfindung haben gezeigt, daß infolge des guten Reduktionsfaktors die Anstiegsflanken der im Kabel erzeugten Überspannungen im allgemeinen relativ flach sind, so daß deren Energie von den Hochpaßfiltern der Stromversorgungsweichen auf ihrem Weg zu den aktiven Elementen des Verstärkers sehr stark beschnitten wird, wogegen bei steilen Spannungssprüngen ein erheblicher Teil der Impulsenergie vom Hochpaß der Stromversorgungsweichen noch übertragen wird. Steilere Überspannungen im Verstärker können nur dann auftreten, wenn in den Tuben unmittelbar am Verstärker Überschläge auftreten. Derartige Überschläge sind aber unwahrscheinlich, da der im Verstärker sich befindliche Überspannungsableiter die angeschlossene Tube vor Überschlägen schützt.

Ausgehend von dieser Erkenntnis ist es Aufgabe der Erfindung, die Zuverlässigkeit eines für Gleichstromreihenspeisung über den Kabelinnenleiter bestimmten Leitungsverstärkers dadurch weiter zu erhöhen, daß sich beim Ansprechen eines zum Schutz des Verstärkerausgangs vorgesehenen Überspannungsableiters eine möglichst geringe Energiebelastung des Ausgangstransistors bzw. der Ausgangstransistoren bei möglichst geringer Beeinträchtigung der Übertragungseigenschaften ergeben.

Gemäß der Erfindung wird der Leitungsverstärker in der im kennzeichnenden Teil des Patentanspruchs 1 angegebenen Weise ausgebildet. Dabei ist nur der Eingang des Verstärkers mit einem oder mehreren Überspannungsableitern zwischen Innenleiter und Außenleiter beschaltet, um einen Schutz der Schaltung, insbesondere vor Überschlägen, zu erreichen.

Durch diese Maßnahmen werden in vorteilhafter Weise die bei bekannten vergleichbaren Leitungsverstärkern durch ausgangseitige Überspannungsableiter verursachten sehr steilen Spannungsprünge vermieden und zugleich durch den eingangsseitigen Überspannungsableiter auch für den Verstärkerausgang ein wirksamer, durch die Stromversorgungsweichen praktisch nicht beeinträchtigter Überspannungsschutz sichergestellt. Da der den Ausgang schützende Überspannungsableiter am Verstärkereingang angeordnet ist und sich zwischen Verstärkerein- und -ausgang die Spulen der Stromversorgungsweichen befinden, deren Induktivitäten für die sehr steilen Spannungssprünge, die beim Ansprechen des örtlichen Überspannungsableiters entstehen, wirksam sind, wirken diese steilen Spannungssprünge nur stark gedämpft auf die empfindlichen Halbleiter des Verstärkerausgangs ein. Andererseits gewährleistet das Sättigungsverhalten der Spulen der Stromversorgungsweichen, daß am Eingang befindliche Überspannungsableiter auch bei am Ausgang ankommenden Übergangsimpulsen, die von entfernteren Überschlägen herrühren und daher verhältnismäßig flach sind, ansprechen und ihre Wirkung praktisch unbeeinträchtigt entfallen können.

In weiterer Ausgestaltung der Erfindung ist auf der Eingangseite des Leitungsverstärkers zwischen dem Hochpaß der Stromversorgungsweichen und dem Eingang des aktiven Verstärkerteiles ein Vorentzerrer angeordnet, so daß der Eingang des aktiven Verstärkerteils in noch größerem Maße unempfindlicher gegen Überspannungen ist als der Ausgang des aktiven Verstärkerteils.

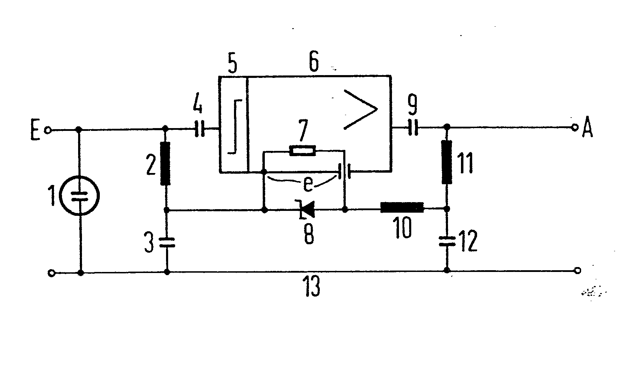

Die Erfindung wird an Hand des in der Figur gezeigten Ausführungsbeispiels näher erläutert.

Die Figur zeigt einen Leitungsverstärker, bei dem der Verstärkereingang und der Verstärkerausgang über Fernspeiseweichen galvanisch miteinander verbunden sind und bei dem am Eingang ein gasgefüllter Überspannungsableiter vorgesehen ist.

Der Leitungsverstärker enthält den aktiven Verstärkerteil 6, der über die beiden Fernspeiseweichen 2, 4 und 9, 11 über den Innenleiter des Kabels ferngespeist wird. Vom Eingang E des Leitungsverstärkers gelangt das Nutzsignal über den als Hochpaß der eingangsseitigen Fernspeiseweiche 2, 4 dienenden Kondensator 4 an den Vorentzerrer 5, der dem aktiven Verstärkerteil 6 vorgeschaltet ist. Der Ausgang des aktiven Verstärkerteils 6 ist über den als Hochpaß der ausgangsseitigen Fernspeiseweiche 9, 11 dienenden Kondensator 9 an den Ausgang A des Leitungsverstärkers geführt.

Der Leitungsverstärker ist für Gleichstromfernspeisung eingerichtet. Der Innenleiter des ankommenden Koaxialkabels ist über die Drossel 2, den Widerstand 7, die Drosseln 10 und 11 an den Innenleiter des abgehenden Koaxialkabels geführt. Der Widerstand 7 stellt den Widerstand dar, der am Speiseeingang e des aktiven Verstärkerteils 6 wirksam ist. Der Spannungsabfall, den der eingeprägte Fernspeisestrom am Widerstand 7 und damit am Speiseeingang e hervorruft, wird durch die parallel zum Speiseeingang e liegende Z-Diode 8 begrenzt.

Der eine Anschluß des Speiseeingangs e liegt auf dem Massepotential des aktiven Verstärkerteils 6 und ist über den als Abblockkondensator dienenden Kondensator 3 an die Kabelaußenleiterverbindung 13 geführt, die die Außenleiter des ankommenden und des abgehenden Koaxialkabels direkt miteinander verbindet. Der andere Anschluß des Speiseeingangs e ist über die Drossel 10 und den dazu in Serie liegenden Kondensator 12 an die Kabelaußenleiterverbindung geführt. Der Kondensator dient dazu, die galvanische Durchverbindung zwischen Eingang E und Ausgang A mit dem Gehäusepotential HF-mäßig zu verbinden und somit eine hochfrequente Rückkopplung zwischen Ausgang und Eingang zu verhindern.

Am Eingang E des Leitungsverstärkers sind der Innenleiter und der Außenleiter des Koaxialkabels über den Überspannungsableiter 1 miteinander verbunden. Am Ausgang A des Leitungsverstärkers ist kein Überspannungsableiter vorgesehen.

Bei dem Leitungsverstärker ist ein gasgefüllter Überspannungsableiter 1 nur am Eingang E des Verstärkers eingesetzt. Der Vorteil dieser Maßnahme besteht insbesondere darin, daß der am Eingang E des Verstärkers beim Ansprechen des Überspannungsableiters 1 verursachte Spannungssprung auf den Ausgang A des Verstärkers über die Stromversorgungstiefpässe (Drosseln 2, 11) nur sehr abgeschwächt einwirken kann. Dabei wirkt sich die langsame Entladung der Kondensatoren 3 und 12 besonders vorteilhaft aus. Eine starke Belastung des Ausgangstransistors bzw. der Ausgangstransistoren des aktiven Verstärkerteils 6 wird dadurch vermieden und somit die Zuverlässigkeit des Verstärkers wesentlich erhöht. Der Eingang des aktiven Verstärkerteils 6 ist auch wegen des vorgeschalteten Vorentzerrers 5 wesentlich unempfindlicher als der Ausgang des aktiven Verstärkerteils 6.

Die Entkopplung des Ein- und Ausgangs ist dadurch verbessert, daß den Stromversorgungsweichen die Drossel 10 eingefügt ist. Diese Drossel verbessert in vorteilhafter Weise das Einschwingverhalten dadurch daß steile Flanken abgeflacht werden.

Wegen der schnellen Sättigung der Tiefpaßspulen (Drosseln 2 und 11) und der Drossel 10 bei langsamen Anstiegen können während des Stromdurchgangs durch die Spulen an diesen keine hohen Restspannungen während der Anstiegsphase entstehen. Die Überspannungsableiter am Eingang E des Verstärkers sind daher in der Lage, den Verstärker in besonderem Maße vor Überschlägen in der Schaltung zu schützen.

Zweckmäßigerweise ist der aktive Verstärkerteil 6 des Leitungsverstärkers auf Seiten des Eingangs E und des Ausgangs A jeweils mit einer eigenen Einrichtung zum Überspannungsfeinschutz versehen. Dieser Überspannungsfeinschutz kann in bekannter Weise, z. B. mit Hilfe von Z-Dioden und/oder Spannungsableitern mit geringer Ansprechspannung realisiert werden und ist daher in der Figur nicht dargestellt.

Zum Schutz der Z-Diode 8 gegen Überlastung kann man zweckmäßigerweise der Z-Diode einen Widerstand vorschalten und über die Serienschaltung aus Z-Diode und Widerstand einen Überspannungsableiter mit geringer Ansprechspannung, z. B. 90 V, legen. Der Widerstand liegt dabei zwischen dem Speiseeingang e und einer der beiden Fernspeiseweichen.

**Patentansprüche**

1. Leitungsverstärker, insbesondere für TF- oder HF-Übertragungsstrecken, mit einer Schaltungsanordnung zum eingangs- und ausgangsseitigen Überspannungsgrobschutz bei Überspannungsbeeinflussung und mit Stromversorgungsweichen (2, 4; 9, 11) zur Fernspeisung des Leitungsverstärkers über den Kabelinnenleiter der Übertragungsstrecke, wobei der Eingang (E) und der Ausgang (A) des Leitungsverstärkers über die Tiefpässe (2, 11) der Stromversorgungsweichen (2, 4; 9, 11) galvanisch miteinander verbunden sind und die galvanische Verbindung wenigstens an einer Stelle über einen Kondensator (3, 12) an eine Kabelaußenleiterverbindung (13) geführt ist, insbesondere mit Anordnung einer Drossel (10) in der galvanischen Verbindung der Tiefpässe (2, 11) und Führung der Tiefpässe (2, 11) jeweils auf Seiten der Drossel (10) über einen eigenen Kondensator (3, 12) an die Kabelaußenleiterverbindung (13), dadurch gekennzeichnet, daß als ein- und ausgangsseitiger Überspannungsgrobschutz nur am Eingang (E) des Leitungsverstärkers wenigstens ein Überspannungsleiter (1) vorgesehen ist und daß die Drosseln (2, 11) der Stromversorgungsweichen (2, 4; 9, 11) und im Zuge der zwischen Eingang (E) und Ausgang (A) gelegenen galvanischen Verbindung gegebenenfalls angeordnete weitere Drosseln (10) derart ausgebildet und bemessen sind, daß sie bei Überströmen mit langsamen Flanken gesättigt sind und daß die galvanische Verbindung zwischen dem Eingang (E) und Ausgang (A) des Leitungsverstärkers derart ausgebildet und/oder beschaltet ist, daß sich eine Begrenzung der daran abfallenden Spannung ergibt.

2. Leitungsverstärker nach Anspruch 1, dadurch gekennzeichnet, daß auf der Eingangsseite des Leitungsverstärkers zwischen dem Hochpaß der Stromversorgungsweichen (2, 4) und dem Eingang des aktiven Verstärkerteils (6) ein Vorentzerrer (5) angeordnet ist.

### Claims

1. A line amplifier, in particular for carrier frequency or high frequency transmission paths, comprising a circuit arrangement for coarse surge voltage protection at the input end and output end from excess voltage interference, and comprising current supply branches (2, 4; 9, 11) for the remote supply of the line amplifier via the cable inner conductor of the transmission path, wherein the input (E) and the output (A) of the line amplifier are d. c. coupled together via low-pass filters (2, 11) of the current supply branches (2, 4; 9, 11) and the d. c. connections decoupled to a cable outer conductor (13) by means of a capacitor (3, 12) at least at one point, and in particular comprising the arrangement of a choke (10) for the d. c. connection of the low-pass filters (2, 11) and decoupling of the low-pass filters (2, 11) to the cable outer conductor connection (13) on each side of the choke (10) by means of a separate capacitor (3, 12), characterised in that at least one surge voltage arrester (1) is arranged only at the input (E) of the line amplifier for coarse surge voltage protection of the input end and output end, and that the chokes (2, 11) of the current suply branches (2, 4; 9, 11) and further chokes (10) which are possily arranged in the d. c. connection path between input (E) and output (A) are so designed and dimensioned that they are saturated by surge currents with slow flanks, and that the d. c. connection between the input (E) and the output (A) of the line amplifier is designed and/or wired in such manner that the voltage drop thereon is limited.

2. A line amplifier as claimed in claim 1, characterised in that a pre-equaliser (5) is arranged at the input end of the line amplifier between the high-pass filter (4) of the current supply branch (2, 4) and the input of the active amplifier element (6).

### Revendications

1. Amplificateur de ligne, en particulier pour des sections de voies de transmission à fréquence porteuse ou à haute fréquence, du type comportant un montage pour la protection grossière et contre une surtension à l'entée et à la sortie dans le cas d'une influence par surtension, ainsi que des aiguilages d'alimentation en courant (2, 4; 9, 11) pour l'alimentation à distance de l'amplificateur de ligne par l'intermédiaire du conducteur intérieur du câble de la section de voie de transmission, l'entrée (E) et la sortie (A) de l'amplificateur de ligne étant reliés entre elles galvaniquement par l'intermédiaire des passe-bas (2, 11) des aiguillages d'alimentation en courant (2, 4; 9, 11), et la liaison galvanique pasant au moins en un emplacement et par un condensateur (3, 12), par une liaison (13) des conducteurs extérieurs des câbles, en particulier avec disposition d'une réactance (10) dans la liaison galvanique des passe-bas (2, 11) et liaison des passe-bas (2, 11), de part et d'autre de la réactance (10), avec la liaison (13) des conducteurs extérieurs des câbles, respectivement par des condensateurs qui leur sont propres, caractérisé par le fait qu'il est prévu, comme protection grossière contre la surtension à l'entrée et à la sortie, au moins un éclateur (1) à l'entrée (E) seulement de l'amplificateur de ligne, et que les réactances (2, 11) des aiguillages de l'alimentation en courant (2, 4; 9, 11) et d'autres réactances (10) disposées éventuellement dans la liaison galvanique située entre l'entrée (E) et la sortie (A), sont réalisées et dimensionnées de telle façon qu'elles sont saturées dans le cas de surintensités à flancs croissant lentement et que la liaison galvanique d'entrée (E) et la sortie (A) de l'amplificatur de ligne est réalisée et/ou racordée de telle façon qu'il en résulte une limitation de la chute de tension intervenant à son niveau.

2. Amplificateur de ligne selon la revendication 1, caractérisé par le fait que du côté entrée de l'amplificateur de ligne, un précorrecteur (5) est disposé entre le passe-haut (4) de l'aiguillage d'alimentation en courant (2, 4) et l'entrée de la partie active (6) de l'amplificateur.